# EUROPÄISCHE PATENTANMELDUNG

(11) **EP 4 763 937 A1**
(43) Veröffentlichungstag der Anmeldung: **24.06.2026**
(21) Anmeldenummer: 25213591.8
(22) Anmeldetag: 05.11.2025
(51) Int. Cl.: C09J 7/38, B60R 16/02

(54) **VERWENDUNG EINES KLEBEBANDES ZUM UMWICKELN VON KABELN IN AUTOMOBILEN**

(30) Priorität: 23.12.2024 DE 102024139703; 13.03.2025 DE 202025101340 U
(71) Anmelder: Certoplast Technische Klebebänder GmbH, 42285 Wuppertal (DE)
(72) Erfinder: Leermann, Timo, 42369 Wuppertal (DE); Rambusch, René, 42113 Wuppertal (DE); Bonda, Lorand, 42285 Wuppertal (DE)
(74) Vertreter: Andrejewski - Honke Patent- und Rechtsanwälte Partnerschaft mbB

(57) **Zusammenfassung**

Gegenstand der Erfindung ist die Verwendung eines Klebebandes zum Umwickeln von Kabeln in Automobilen, insbesondere zur Anwendung im Motorraum eines Automobils. Dabei ist das Klebeband mit einem halogenfreien sowie flammfest ausgelegten Träger und der Träger wenigstens einseitig mit einer Klebebeschichtung aus einem Haftklebstoff ausgerüstet. Die Klebebeschichtung enthält ein halogenfreies Flammschutzmittel auf Basis einer einzigen Organophosphorverbindung mit einem Schmelzpunkt von mehr als 85 °C.

## Beschreibung

Die Erfindung betrifft die Verwendung eines Klebebandes zum Umwickeln von Kabeln in Automobilen.

Geeignete Klebebänder für die obige Verwendung sind aus der Praxis bekannt und werden hinlänglich im Stand der Technik beschrieben. Tatsächlich kommt es für die Verwendung zum Umwickeln von Kabeln in Automobilen typischerweise darauf an, dass die fraglichen Klebebänder handeinreißbar sind, um ihre Verarbeitung zu erleichtern. Außerdem müssen Anforderungen im Hinblick auf die Medienbeständigkeit in Bezug auf beispielsweise Benzin oder Öl erfüllt werden. Darüber hinaus kommt es bei solchen Klebebändern oftmals darauf an, dass diese abriebfest gestaltet sind, um die hiermit umwickelten Kabel eines Kabelbaumes vor Abrieb zu schützen. Im Zusammenhang mit der Verarbeitung wird auch eine bestimmte Reißfestigkeit in Längsrichtung gefordert.

Geeignete und im Stand der Technik beispielsweise nach der DE 101 50 453 A1 der Anmelderin beschriebene Klebebänder setzen darüber hinaus ein Flammschutzmittel im oder am Träger ein, um eine flammfeste Ausrüstung zumindest des Trägers zu realisieren. Das ist bei den beschriebenen Anwendungen oftmals erforderlich, um die Entflammbarkeit zu reduzieren oder gänzlich zu unterdrücken.

Tatsächlich kann es insbesondere bei Elektro- oder Hybridkraftfahrzeugen bei den dort eingesetzten Akkumulatoren zu einer sogenannten Selbstentzündung kommen. Um an dieser Stelle etwaige Brandherde zu verhindern oder zumindest hinsichtlich ihrer Ausdehnung zu minimieren, kommen im Stand der Technik Flammschutzmittel im Träger des betreffenden Klebebandes zur Anwendung. Solche Flammschutzmittel können die Entflammbarkeit des Trägers durch eine Reihe von Mechanismen verringern. Beispielsweise gelingt mithilfe solcher Flammschutzmittel das Löschen freier Radikale in der Gasphase. Außerdem können Flammschutzmittel mit chemischen Fragmenten des brennenden Materials reagieren, um die Bildung von Kohle einzuleiten und damit den Brand einzudämmen. Darüber hinaus kommen Brandschutzmittel zum Einsatz, um Barriereschichten innerhalb des brennenden Materials zu bilden.

Neben dem zuvor in Bezug genommenen Stand der Technik, welcher bereits einen flammhemmend ausgerüsteten Träger bei einem Klebeband im Zusammenhang mit der Verwendung zum Umwickeln von Kabeln in Automobilen beschreibt, ist es grundsätzlich auch bekannt, Flammschutzmittel i. V. m. Haftklebstoffzusammensetzungen einzusetzen, wie dies in der WO 2024/184 507 A1 im Detail beschrieben wird. An dieser Stelle geht es jedoch nicht um das Umwickeln von Kabeln in Automobilen, sondern um Kaschierprozesse. Zu diesem Zweck wird als Träger typischerweise eine Polyesterfolie eingesetzt und mit einer Haftklebstoffzusammensetzung für den Einsatz in Sprühanwendungen ausgerüstet. Zu diesem Zweck kommt unter anderem ein Organophosphor-Flammschutzmittel für die Klebstoffzusammensetzung zum Einsatz.

Die bekannte Polyesterfolie mit der detailliert beschriebenen Haftklebstoffzusammensetzung wird beispielsweise zur Herstellung von Batteriepacks und/oder Modulen von Elektrofahrzeugen oder von Innenraumverkleidungskomponenten von Kraftfahrzeugen eingesetzt. In diesen Kraftfahrzeuginnenbereichen werden typischerweise weder hohe Temperaturen noch scharfe Kanten beobachtet. Außerdem ist hier nicht mit Benzin, Öl oder anderen aggressiven Chemikalien zu rechnen, die den mit dem Klebeband umwickelten Kabelbaum angreifen oder angreifen können.

Die schließlich noch als Stand der Technik zu berücksichtigende Vorveröffentlichung DE 10 2007 027 852 A1 befasst sich mit einem Wickelband mit einer Folie aus thermoplastischem Polyurethan. Das Polyurethan ist dabei optional mit einem phosphorhaltigen Flammschutzmittel ausgerüstet. Außerdem verfügt die an dieser Stelle eingesetzte Folie bzw. der Träger des flammwidrigen Wickelbandes über eine Klebebeschichtung in Gestalt einer haftklebrigen Beschichtung.

Im Hinblick auf den an dieser Stelle eingesetzten Klebstoff werden verschiedene Additive, Weichmacher und Füllstoffe neben grundsätzlich auch einem Flammschutzmittel angesprochen. Welche Flammschutzmittel im Zusammenhang mit der Klebebeschichtung zum Einsatz kommen, bleibt allerdings offen.

Dementsprechend liegt der Erfindung das technische Problem zugrunde, eine derartige Verwendung eines Klebebandes zum Umwickeln von Kabeln in Automobilen so weiterzuentwickeln, dass unter Berücksichtigung einer speziellen Eignung für den Motorraum und die hier herrschenden Bedingungen zugleich eine wirksame flammfeste Ausrüstung zur Verfügung gestellt wird.

Zur Lösung dieser technischen Problemstellung ist Gegenstand der Erfindung die Verwendung nach Anspruch 1.

Tatsächlich wird im Rahmen der Erfindung so vorgegangen, dass das Klebeband zunächst einmal mit einem vorzugsweise halogenfreien sowie flammfest ausgelegten Träger ausgerüstet wird. Dieser halogenfreie sowie flammfest ausgelegte Träger meint dabei einen solchen, der auf halogenhaltige Flammschutzmittel verzichtet. Denn solche halogenierten Flammschutzmittel wie z. B. polychlorierte Biphenyle sind zwar generell bekannt und wirken der Brandentwicklung brennbarer Materialien äußerst wirksam entgegen. Allerdings gelten viele dieser halogenierten Flammschutzmittel mittlerweile als Gefahrstoffe und sind aus diesem Grund regional beispielsweise in der Europäischen Union verboten.

Erfindungsgemäß wird folglich meistens mit einem halogenfreien sowie dennoch flammfest ausgelegten Träger gearbeitet. Dabei kann der Träger grundsätzlich als Folienträger ausgebildet sein. Hier haben sich Folienträger wie beispielsweise solche auf Basis einer Polyesterfolie als besonders günstig erwiesen. In diesem Fall kann ein entsprechendes Flammschutzmittel bspw. durch eine Waschung der Folie ein- oder aufgebracht werden. Auch die Zugabe des Flammschutzmittels zum Extrudat bzw. dem Granulat für die Extrusion der Folie ist denkbar.

Daneben kann das Flammschutzmittel aber auch als Comonomer in den jeweiligen Kunststoff für die Herstellung der Folie eingebracht werden. Tatsächlich kommen an dieser Stelle primär thermoplastische Kunststoffe wie beispielsweise PP (Polypropylen), PE (Polyethylen) und insbesondere PET (Polyethylenterephthalat) als spezielle Polyesterfolie oder auch Polyamid zum Einsatz.

Von besonderer Bedeutung für die Erfindung ist nun der Umstand, dass die Klebebeschichtung mit dem halogenfreien Flammschutzmittel auf Basis der einzigen Organophosphorverbindung ausgerüstet ist. Das heißt, im Gegensatz zum Stand der Technik nach der WO 2024/184 507 A1 wird erfindungsgemäß gerade nicht mit einer ersten und einer zweiten Organophosphorverbindung gearbeitet. Vielmehr hat es sich als völlig ausreichend herausgestellt, dass die Klebebeschichtung mit der einen einzigen Organophosphorverbindung ausgerüstet ist. Das reduziert den herstellungstechnischen Aufwand und damit die Kosten.

Außerdem ist die Auslegung zusätzlich noch so getroffen, dass die fragliche einzige Organophosphorverbindung und damit das Flammschutzmittel insgesamt mit einem Schmelzpunkt von mehr als 85 °C ausgerüstet ist. Als Höchstgrenze wird im Allgemeinen ein Schmelzpunkt von weniger als 200 °C, vorzugsweise von weniger als 150 °C und insbesondere von 125 °C und weniger beobachtet.

Daneben hat es sich bewährt, wenn der Folienträger als Metallfolienträger ausgelegt ist oder einen solchen beinhaltet. In diesem Fall wird als Folienträger für das erfindungsgemäß eingesetzte Klebeband beispielsweise ein Aluminiumfolienträger, ein Kupferfolienträger etc. eingesetzt. Grundsätzlich eignen sich hier auch andere Metalle zur Realisierung der Metallfolie wie bspw. Silber, Platin, Zinn, Zink, Titan aber auch Metalloxide wie Zinnoxide, Zinkoxide, Magnesiumoxide usw. Selbstverständlich sind auch Kombinationen im Sinne eines Laminates denkbar, beispielsweise dergestalt, dass ein solcher Metallfolienträger mit einem Polyesterfolienträger im Sinne eines Laminates vereinigt wird.

Beispielsweise kann so vorgegangen werden, dass eine Polyesterfolie mit Aluminium bedampft wird und somit einen Folienträger bildet, der einen Metallfolienträger beinhaltet, nämlich die Aluminiumschicht auf dem Polyesterfolienträger. So oder so ist in diesen sämtlichen Fällen damit zu rechnen, dass der Träger für das Klebeband ohne zusätzlich eingebrachtes Flammschutzmittel nicht nur halogenfrei, sondern auch flammfest ausgelegt werden kann. Hierfür sorgt der Metallfolienträger als solcher bzw. die Metallbeschichtung beim Laminat aus dem Polyesterfolienträger und der Aluminiumschicht im Beispielfall. So oder so ist damit zu rechnen, dass durch eine solche Auslegung die Brand-/Flammengefahr insbesondere im Motorraum des Kraftfahrzeuges minimiert wird.

Ferner zeichnet sich das eingesetzte Kunststoffmaterial wie Polyester oder Polyamid durch eine hohe Alterungsbeständigkeit, Medienbeständigkeit gegenüber Chemikalien und Betriebsmitteln wie Öl, Benzin, Frostschutzmittel o.ä. aus. Ebenso wird hierdurch eine hohe Abriebbeständigkeit erzielt, die besonders im hier betrachteten Motorraum relevant ist.

Sofern ein Folienträger aus einem thermoplastischen Kunststoff und insbesondere PET zum Einsatz kommt, ist dieser Folienträger halogenfrei sowie flammfest ausgelegt. Das bedeutet konkret, dass der Träger und insbesondere Folienträger beispielsweise dem Standard VTM-0 zur Klassifizierung seines Brandverhaltens genügt. Besagter Standard VTM-0 wird im Rahmen der Vorschrift UL 94 V definiert, der nachfolgend noch näher erläutert wird. Unter dem Standard VTM-0 ist ein Standard zur Charakterisierung des Brandschutzverhaltens von dünnen Folien "very thin material" zu verstehen. Hierunter fallen Kunststoffmaterialien, die zu dünn sind, um die üblichen Normen und Prüfungen für die Klassifizierung des Brandverhaltens von Kunststoffen durchlaufen zu können. Meistens handelt es sich hierbei um Folien, die normalerweise keine horizontale Tragfähigkeit besitzen und üblicherweise in flexiblen Leiterplatten verwendet werden. Dabei werden typischerweise Materialstärken von weniger als 1 mm beobachtet.

Tatsächlich kommt für solche materialstärkeren Kunststoffe meistens der sogenannte Kriterienkatalog UL 94V (Underwriters Laboratories, "Tests for Flammability of Plastic Materials for Parts in Devices and Appliances", abgerufen am 1. Dezember 2021) zum Einsatz. Für den VTM-Test wird nun wie folgt vorgegangen. Die Brennzeit eines Probestückes wird in Sekunden nach einer ersten und zweiten Beflammung gemessen. Außerdem wird die Gesamtbrennzeit in Sekunden bei zehn Beflammungen bestimmt. Darüber hinaus werden sogenannte Brenn- und Nachglühzeiten in Sekunden nach der zweiten Beflammung ermittelt und untersucht, ob ein brennendes Abtropfen erfolgt. Anschließend wird die Probe bis zur Halteklammer abgebrannt.

Für die Einordnung in die Schutzklasse als VTM-0 Folie sind folgende Werte zu erreichen:
- Brennzeit nach erster und zweiter Beflammung von unter 10 Sekunden;
- Gesamtbrennzeit bei zehn Beflammungen unter 50 Sekunden;
- Brenn- und Nachglühzeiten unter 30 Sekunden;
- kein brennendes Abtropfen und
- kein Abbrennen bis zur Halteklammer.

Alternativ zu der Prüfung nach dem Standard VTM kann der Träger und speziell Folienträger auch hinsichtlich seines Brandverhaltens derart klassifiziert werden, dass er als selbstverlöschend SE im Sinne der Norm FMVSS 302 (24. September 1998) gewertet wird. Hierbei handelt es sich um einen USamerikanischen Sicherheitsstandard, der das Brennverhalten von Innenausstattungsmaterialien in Kraftfahrzeugen regelt. Vergleichbar geht die DIN-Norm DEN 75/200 (1980-09) vor, welche aus der vorgenannten amerikanischen Norm FMVSS 302 entwickelt wurde. Die Prüfverfahren sind praktisch identisch, wobei in der DIN-Norm lediglich der Versuchsaufbau und die Durchführung der Brennprüfung sowie die Bestimmung der Brenngeschwindigkeit beschrieben werden, wohingegen die FMVSS 302 zusätzlich noch Beurteilungskriterien festlegt. Insgesamt ist hierunter ein Test zu verstehen, bei dem die Entflammbarkeit eines Probestückes in einem eingespannten Rahmen ermittelt wird. Dabei wird die Probe einer definierten und 38 mm hohen Flamme unter Berücksichtigung einer Dauer von 15 Sek. ausgesetzt.

Das Charakteristikum selbstverlöschend bzw. "self extinguishing" SE bedeutet dabei, dass die Flamme innerhalb eines Gesamtmessweges erlischt, was zu einer Brennrate unter Berücksichtigung eines Brennweges von 0 mm bei einer Brennzeit von 16 Min. führt, also 0 mm/Min. für die Brennrate gilt.

Sobald ein Träger bzw. Folienträger die zuvor erläuterten Kriterien erfüllt, wird er im Rahmen der vorliegenden Erfindung als flammfest ausgelegt charakterisiert. Das gilt in gleicher Weise auch für den Fall, dass nicht ein Folienträger, sondern ein textiler Träger aus Kunststofffasern oder Kunststofffäden oder ein Metallfolienträger zum Einsatz kommt.

Tatsächlich handelt es sich nach weiterer vorteilhafter Ausgestaltung bei dem Träger um einen textilen Träger aus beispielsweise Kunststofffasern oder Kunststofffäden. Der textile Träger kann in diesem Zusammenhang als Gewebe, Vlies, Gewirke etc. ausgebildet sein.

Dabei können vorteilhaft beispielsweise bei einem Vlies Stapelfasern aus Polyester und/oder Polyamid zum Einsatz kommen. Ebenso ist der Rückgriff auf bspw. Filamentgarne bzw. -fäden aus Polyester und/oder Polyamid denkbar. Solche textilen Träger lassen sich besonders einfach und kostengünstig für die Verwendung zum Umwickeln von Kabeln in Automobilen und insbesondere im Motorraum von Automobilen konfektionieren. Das gilt beispielsweise vor dem Hintergrund, dass sich auf diese Weise Klebebänder realisieren lassen, die die sämtlichen Anforderungen gemäß der Norm LV 312-1 (Oktober 2009) erfüllen. So kann das erfindungsgemäße Klebeband auf diese Weise grundsätzlich handeinreißbar ausgebildet werden, wozu typischerweise eine Bruchkraft in Querrichtung des Klebebandes gemäß DIN EN 14410 (2003-06) von weniger als 90 N/cm korrespondiert.

Darüber hinaus ist für die beanspruchte Verwendung des Klebebandes auch eine bestimmte Abriebbeständigkeit erforderlich, die sich gemäß der vorgenannten Norm LV 312-1 dahingehend manifestiert, dass wenigstens die Abriebklasse C erreicht wird. Hierzu korrespondiert ein in der betreffenden Norm beschriebener Abriebtest, welcher bis zum Durchscheuern beim Erreichen der Abriebklasse C zu 500 bis 999 Hüben im Minimum korrespondiert. Ferner zeichnen sich die eingesetzten Klebebänder der Erfindung in der beschriebenen Verwendung typischerweise durch eine Reißdehnung zwischen der ursprünglichen Musterlänge und der Länge im Moment des Reißens von weniger als 200 % und insbesondere von weniger als 50% aus. Außerdem verfügt das eingesetzte Klebeband bzw. dessen Träger im Allgemeinen über ein Flächengewicht, welches 350 g/m² nicht überschreitet.

Als wesentliches Kriterium ist auch noch zu berücksichtigen, dass in diesem Zusammenhang im Allgemeinen eine bestimmte Temperaturbeständigkeit des Klebebandes insgesamt beobachtet wird, die vorliegend zur sogenannten Temperaturklasse C nach der LV 312-1 korrespondiert, was mit einer Dauergebrauchstemperatur von 125 °C einhergeht. Die Untergrenze für die Dauergebrauchstemperatur im Zusammenhang mit der Temperaturklasse C liegt bei - 40 °C.

Daneben kommt es auf die besondere Chemikalienbeständigkeit des Trägers bzw. des Klebebandes insgesamt an, weil im beanspruchten Einsatzgebiet die mit dem Klebeband umwickelten Leitungssätze mit aggressiven Flüssigkeiten in Kontakt kommen können und dennoch beständig sein müssen, um ihre Funktionalität dauerhaft zu gewährleisten. Dazu werden Leitungen mit Klebebändern bewickelt und U-förmig gebogen sowie in die jeweils zu prüfende Chemikalie getaucht, beispielsweise Schmierfett. Danach werden die Prüflinge für in der Regel 1000 Stunden in einen Wärmeschrank eingelagert und einer Sicht- sowie Spannungsprüfung unterzogen, wie dies in der bereits genannten Norm LV 312-1 im Detail beschrieben wird. Dabei kommt es insbesondere auf eine Beständigkeit von wenigstens 240 Stunden für sämtliche Chemikalien an, die in diesem Zusammenhang relevant sind und in der fraglichen Norm LV 312-1 aufgeführt werden. Durch den Rückgriff auf insbesondere Polyester oder Polyamid als Ausgangsmaterialien für den Träger werden diese Anforderungen typischerweise erfüllt, sei es als Folienträger oder ebenso als textiler Träger.

Außerdem wird das fragliche Klebeband einer Prüfung auf Flammbeständigkeit unterzogen, wobei an dieser Stelle für das Klebeband zumindest die Brandklasse C nach der LV 312-1 mit Brenngeschwindigkeiten von deutlich unterhalb von 100 mm/min, meistens sogar von weniger als 50 mm/min beobachtet werden. Teilweise können sogar die Brandklasse B (selbstverlöschend) oder sogar A (nicht brennbar) realisiert und umgesetzt werden. Die vorgenannte Prüfung wird von den fraglichen Klebebändern im Allgemeinen problemlos durchlaufen, sofern die zuvor angegebenen Normen VTM-O bzw. SE im Sinne von FMVSS 302 bzw. DIN 75200 für den Träger erfüllt werden und zusätzlich die Klebebeschichtung anspruchsgemäß ausgelegt ist.

Zu diesem Zweck sind die Kunststofffasern beziehungsweise Kunststofffäden im Falle des textilen Trägers mit einem eingebrachten und vorzugsweise koextrudierten Flammschutzmittel ausgerüstet. Vergleichbares kann auch dann vorgenommen und realisiert werden, wenn der Träger ein Folienträger ist. D. h., das Flammschutzmittel wird zusammen mit beispielsweise Polymergranulat bei der Herstellung der Kunststofffasern respektive Kunststofffäden oder des Folienträgers in den Extruder eingebracht und zusammen mit dem Polymermaterial koextrudiert, um auf diese Weise die Kunststofffasern und damit die Kunststofffäden oder auch die Folie herstellen zu können. Dadurch kommt es zu einer besonders wirksamen und homogenen Durchmischung mit dem Polymermaterial für die Kunststofffasern bzw. Kunststofffäden oder auch den Folienträger.

Das dem Polymermaterial hinzugefügte Flammschutzmittel zur Realisierung des Trägers kann dabei in einer Grammatur von ca. 0,5 Gew.-% bis in etwa 20 Gew.-% bezogen auf das Gesamtgewicht des Trägers eingebracht werden. Die entsprechende Mischung aus dem Flammschutzmittel und dem Polymermaterial wird dabei vor dem Extrudieren im Regelfall hergestellt, bzw. wird das Flammschutzmittel dem Extrudat in der angegebenen Grammatur hinzugefügt. Dabei kann es sich sowohl um ein anorganisches als auch ein organisches Flammschutzmittel handeln, wie nachfolgend noch näher erläutert wird. Auch eine Mischung ist denkbar.

Das Flammschutzmittel kann grundsätzlich auch als Comonomer im jeweiligen Kunststoff vorhanden sein, sei es als Kunststoff für die Herstellung der Folie des Folienträgers oder sei es als Kunststoff zur Herstellung der Kunststofffasern bzw. Kunststofffäden bei dem textilen Träger. In diesem Fall ist das Flammschutzmittel gleichsam in den Kunststoff eingebaut. Dabei werden vergleichbare Grammaturen für das Flammschutzmittel im Vergleich zum Polymermaterial beobachtet, wie sie zuvor bereits beschrieben worden sind.

Bei dem an dieser Stelle eingesetzten Flammschutzmittel für den Träger kann es sich grundsätzlich um ein solches auf anorganischer Basis handeln, beispielsweise auf Basis von Metalloxiden, Metallhydroxiden und Tonen. Grundsätzlich ist als Flammschutzmittel für den Träger auch ein solches auf Basis von beispielsweise einem Phosphat und hier Aluminiumpolyphosphat denkbar. Außerdem kann als Flammschutzmittel eine phosphororganische Verbindung Berücksichtigung finden.

Die Klebebeschichtung ist ihrerseits - ebenso wie der Träger - flammhemmend bzw. flammfest ausgelegt. Zu diesem Zweck enthält die Klebebeschichtung ein halogenfreies Flammschutzmittel mit einem Schmelzpunkt von mehr als 85 °C. Außerdem hat es sich als besonders günstig erwiesen, wenn das Flammschutzmittel für die Klebebeschichtung aus dem Haftklebstoff einen Schmelzpunkt von weniger als 125 °C aufweist. Dadurch kommt es typischerweise bei einem Brand dazu, dass durch das eingebrachte Flammschutzmittel die Bildung von Kohle begünstigt wird und es somit zum Erlöschen einer etwaigen Flamme kommt.

Das Flammschutzmittel liegt in der Klebebeschichtung bzw. im Haftklebstoff im Allgemeinen in einer Grammatur von ca. 0,5 Gew.-% bis 30 Gew.-% bezogen auf das Gesamtgewicht des Klebstoffes vor. Außerdem kann an dieser Stelle mit Zusätzen für das Flammschutzmittel auf anorganischer Basis gearbeitet werden. Beispielsweise mag der Zusatz auf Basis von Metalloxiden, Metallhydroxiden und Tonen hergestellt sein. In diesem Zusammenhang ist es denkbar, dass das Flammschutzmittel für die Klebebeschichtung ausschließlich die einzige Organophosphorverbindung und den fraglichen Zusatz oder die mehreren Zusätze beinhaltet.

Bei dem Flammschutzmittel für die Klebebeschichtung auf Basis der einzigen Organophosphorverbindung handelt es sich um beispielsweise Phosphanate oder Phosphinate. Kommen sowohl organische als auch anorganische Flammschutzmittel zum Einsatz, so empfiehlt die Erfindung, dass das anorganische Flammschutzmittel bzw. der Zusatz in der Mischung bis zu 10 Gew.-%, bezogen auf die Gesamtmasse bzw. das Gesamtgewicht der Klebebeschichtung, vorliegt. Die übrigen bis zu 20 Gew.-% werden dagegen von dem organischen Flammschutzmittel bzw. der einzigen Organophosphorverbindung eingenommen.

Dabei haben sich unter anderem Phosphaphenanthrene, Phosphonamidate, Phosphazene und insbesondere Cyclotriphosphazene und Phosphorsäureester als Flammschutzmittel als besonders günstig erwiesen. Der Klebstoff als solcher mag dabei ansonsten auf Acrylatbasis hergestellt sein und zusätzlich ein Klebeharz aufweisen. Alternativ hierzu ist auch ein Klebstoff auf Basis eines Styrol-Blockcopolymers denkbar und wird erfindungsgemäß mit abgedeckt.

Derartige Flammschutzmittel auf organischer Basis zeichnen sich dadurch aus, dass hierdurch insgesamt die Klebebeschichtung und damit das Klebeband flammhemmend ausgelegt werden kann. Das korrespondiert dazu, dass das Klebeband, wenn es einer Prüfflamme ausgesetzt wird, nach insgesamt fünf jeweils 15 sekündigen Anwendungen der Prüfflamme gemäß der Norm UL 510 (2020-04-17) nicht länger als 60 Sekunden brennt. Bei der fraglichen Norm handelt es sich um eine in den USA etablierte Vorschrift, die ursprünglich für die Prüfung von Kunststoffen bei Elektrogeräten zum Einsatz gekommen ist, mittlerweile sich jedoch weltweit für die Einstufung der Flammwidrigkeit und Brandsicherheit von Kunststoffen durchgesetzt hat. Dabei wird das Klebeband einer Prüfflamme ausgesetzt und darf nach fünf 15 sekündigen Anwendungen nicht länger als 60 Sekunden brennen. Der Begriff UL steht dabei für Underwriters Laboratories. Meistens werden in diesem Zusammenhang die strengeren und zuvor bereits in Bezug genommenen Normen SE im Sinne der FMV SS 302 bzw. DIN 75200 oder VTM-0 ebenso erfüllt.

Vergleichbar wird im Rahmen der LV 312-1 gearbeitet, wo allenfalls eine geringe Brenngeschwindigkeit von weit unter 100 mm/min entsprechend der erreichten Brandklasse C für das erfindungsgemäß eingesetzte Klebeband beobachtet wird und meistens sogar das der Flamme ausgesetzte Material (Klebeband) verlischt, bevor die zuvor beschriebene 15 sekündige Dauer erreicht worden ist.

Im Ergebnis wird die Verwendung eines Klebebandes zum Umwickeln von Kabeln in Automobilen und insbesondere zum Umwickeln von Kabeln in Motorräumen von Automobilen beschrieben, die sich dadurch auszeichnet, dass das Klebeband sowohl mit einem regelmäßig halogenfreien und flammfest ausgelegten Träger als auch einer Klebebeschichtung aus einem Haftklebstoff ausgerüstet ist, welche ein halogenfreies Flammschutzmittel mit einem Schmelzpunkt von mehr als 85 °C und in der Regel weniger als 125 °C ausgerüstet ist. Dadurch wird typischerweise wenigstens die Brandklasse C nach LV 312-1 erreicht bzw. zeichnet sich das Klebeband dadurch aus, dass eine Prüfflamme entsprechend der Norm UL 510 (2020-04-17) zum Brennen des Klebebandes für eine Dauer von weniger als 15 Sekunden führt.

Auf diese Weise ist das eingesetzte Klebeband für die beschriebenen Anwendungen prädestiniert, weil nicht nur eine flammfeste Ausrüstung zur Verfügung gestellt wird, sondern das eingesetzte Klebeband auch ansonsten die für den beschriebenen Anwendungszweck erforderlichen Anforderungen erfüllt. Das gilt insbesondere im Hinblick auf die erreichte Handeinreißbarkeit ebenso wie die Abriebbeständigkeit. Dadurch ist damit zu rechnen, dass das Klebeband im Normalbetrieb einen wirksamen Schutz des hiermit umwickelten Kabelbaumes zur Verfügung stellt und sich einfach verarbeiten lässt. Sofern an dieser Stelle mit einem textilen Träger gearbeitet wird, ist auch davon auszugehen, dass nicht nur die erforderliche Chemikalienbeständigkeit und Flammbeständigkeit erreicht wird, sondern auch eine geräuschdämpfende Wirkungen beobachtet wird. So hat es sich in diesem Zusammenhang als günstig erwiesen, wenn das betreffende Klebeband zusätzlich eine wenigstens mittlere Geräuschdämpfung entsprechend der Klasse C nach LV 312-1 zeigt und aufweist. Dadurch sind etwaige Klappergeräusche im Betrieb auf ein Minimum reduziert.

Hierzu trägt ergänzend der Umstand bei, dass das fragliche Klebeband entweder wendelförmig um die Kabel herumgewickelt wird oder als Längsumschlag um die Kabel herumgeschlagen wird. Eine solche Anwendung ist möglich und wird umfasst, weil der flammfest ausgelegte Träger im Allgemeinen über ein Flächengewicht zwischen 50 g/m² und 300 g/m² verfügt und eine Materialstärke von bis zu 5 mm aufweist. Für die Klebebeschichtung wird ein Flächengewicht von 80 g/m² bis 200 g/ m² beobachtet. Die Klebebeschichtung selbst mag in einer Schichtdicke von bis zu 2 mm vorliegen. Außerdem kann die Klebebeschichtung vollflächig und durchgängig, streifenförmig oder sogar punktförmig auf den Träger aufgebracht sein. Hierin sind die wesentlichen Vorteile zu sehen.

## Patentansprüche

1. Verwendung eines Klebebandes zum Umwickeln von Kabeln in Automobilen, insbesondere zur Anwendung im Motorraum eines Automobils, wobei das Klebeband mit einem flammfest ausgelegten Träger und der Träger wenigstens einseitig mit einer Klebebeschichtung aus einem Haftklebstoff ausgerüstet ist, und wobei die Klebebeschichtung ein halogenfreies Flammschutzmittel auf Basis einer einzigen Organophosphorverbindung mit einem Schmelzpunkt von mehr als 85 °C enthält.

2. Verwendung nach Anspruch 1, **dadurch gekennzeichnet, dass** das Flammschutzmittel der Klebebeschichtung einen Schmelzpunkt von weniger als 200 °C, vorzugsweise von weniger als 150 °C und insbesondere von weniger als 125 °C aufweist.

3. Verwendung nach Anspruch 1 oder 2, **dadurch gekennzeichnet, dass** das Flammschutzmittel in der Klebebeschichtung in einer Grammatur von ca. 0,5 Gew.-% bis 30 Gew.-%, bezogen auf das Gesamtgewicht des Haftklebstoffes, vorliegt.

4. Verwendung nach einem der Ansprüche 1 bis 3, **dadurch gekennzeichnet, dass** das Flammschutzmittel der Klebebeschichtung zusätzlich einen Bestandteil auf anorganischer Basis aufweist, beispielsweise auf Basis von Metalloxiden, Metallhydroxiden oder Tonen.

5. Verwendung nach einem der Ansprüche 1 bis 4, **dadurch gekennzeichnet, dass** das Flammschutzmittel der Klebebeschichtung beispielsweise auf Basis von Phosphanaten, Phosphinaten, Phosphaphenanthrene,Phosphonamidaten, Phosphazene (insbesondere Cyclotriphosphazene) und Phosphorsäureester hergestellt ist.

6. Verwendung nach einem der Ansprüche 1 bis 5, **dadurch gekennzeichnet, dass** der Träger als Folienträger ausgebildet ist.

7. Verwendung nach Anspruch 6, **dadurch gekennzeichnet, dass** der Folienträger aus einem thermoplastischen Kunststoff wie beispielsweise PP, PE und insbesondere PET hergestellt ist.

8. Verwendung nach Anspruch 6 oder 7, **dadurch gekennzeichnet, dass** der Träger dem Standard VTM-0 zur Klassifizierung seines Brandverhaltens genügt oder als selbstverlöschend SE im Sinne der Norm FMVSS 302/DIN 75200 gewertet wird.

9. Verwendung nach Anspruch 6, **dadurch gekennzeichnet, dass** der Folienträger als Metallfolienträger ausgelegt ist oder einen solchen beinhaltet.

10. Verwendung nach einem der Ansprüche 1 bis 9, **dadurch gekennzeichnet, dass** der Träger als textiler Träger aus beispielsweise Kunststofffasern oder Kunststofffäden aus beispielsweise PE, PP oder PET ausgebildet ist.

11. Verwendung nach Anspruch 10, **dadurch gekennzeichnet, dass** die Kunststofffasern bzw. Kunststofffäden mit einem eingebrachten und vorzugsweise koextrudierten Flammschutzmittel ausgerüstet sind.

12. Verwendung nach Anspruch 10 oder 11, **dadurch gekennzeichnet, dass** das Flammschutzmittel als Comonomer in der jeweiligen Kunststofffaser bzw. dem Kunststofffaden verankert ist.

13. Verwendung nach einem der Ansprüche 10 bis 12, **dadurch gekennzeichnet, dass** es sich bei dem Flammschutzmittel für den Träger um ein Phosphat wie beispielsweise Ammoniumpolyphosphat und/oder ein Metalloxid wie beispielsweise Titandioxid und/oder eine phosphororganische Verbindung handelt.

14. Verwendung nach einem der Ansprüche 1 bis 13, **dadurch gekennzeichnet, dass** das Klebeband wendelförmig um die Kabel herumgewickelt wird.

15. Verwendung nach einem der Ansprüche 1 bis 13, **dadurch gekennzeichnet, dass** das Klebeband als Längsumschlag um die Kabel herumgeschlagen wird.
